# EUROPÄISCHE PATENTSCHRIFT

(11) **EP 2 761 791 B1**
(45) Veröffentlichungstag und Bekanntmachung des Hinweises auf die Patenterteilung: **02.05.2018**
(21) Anmeldenummer: 12780671.9
(22) Anmeldetag: 28.09.2012
(51) Int. Cl.: H04B 17/391

(54) **MESSVERFAHREN ZUR ANALYSE DER AUSBREITUNG ELEKTROMAGNETISCHER NAVIGATIONSSIGNALE**
MEASUREMENT METHOD FOR ANALYSING THE PROPAGATION OF ELECTROMAGNETIC NAVIGATION SIGNALS
PROCÉDÉ DE MESURE POUR ANALYSER LA PROPAGATION DE SIGNAUX DE NAVIGATION ÉLECTROMAGNÉTIQUES

(30) Priorität: 30.09.2011 DE 102011054093
(43) Veröffentlichungstag der Anmeldung: 06.08.2014
(73) Patentinhaber: Technische Universität Braunschweig, 38106 Braunschweig (DE)
(72) Erfinder: GEISE, Robert, 38106 Braunschweig (DE); ENDERS, Achim, 38106 Braunschweig (DE)
(74) Vertreter: Zenz Patentanwälte Partnerschaft mbB
(86) Internationale Anmeldenummer: PCT/EP2012/069190
(87) Internationale Veröffentlichungsnummer: WO 2013/045615

(56) Entgegenhaltungen:
- US-A1- 2008 130 790

## Beschreibung

Die Erfindung betrifft ein Messverfahren zur Untersuchung der Mehrwegeausbreitung und Streuung elektromagnetischer Wellen.

Mit zunehmender Relevanz und immer intensiverem Einsatz elektromagnetischer Signalübertagung bei gleichzeitiger Erhöhung der Komplexität von Systemen wird die Analyse der Ausbreitung und Wechselwirkung elektromagnetischer Signale in diesen Systemen immer wichtiger. Insbesondere für Navigationsanlagen im Luftverkehr ist die Mehrwegeausbreitung, also die Veränderung eines Navigationssignals durch Reflexionen bzw. Streuung an Objekten auf einem Weg zwischen Sender und Empfänger, von sicherheitsrelevanter und auch wirtschaftlicher Bedeutung. Die sicherheitsrelevante Forderung, dass die Veränderungen eines Navigationssignals international geltende Toleranzgrenzen nicht überschreiten dürfen, stellt dabei zwangsläufig entsprechende Anforderungen an die Abwicklung des Luftverkehrs, die sich bzgl. wirtschaftlicher Aspekte wie der Flughafenkapazität immer einschränkend auswirken.

Die messtechnische Charakterisierung zeitvarianter (Mehrwege)-Ausbreitungskanäle, ist grundsätzlich ein akzeptiertes Konzept, gerade im Bereich des Mobilfunk- bzw. Kommunikationssektors. Im Stand der Technik ist hierzu insbesondere das sogenannte "Channel-Sounding" bekannt. Der Ansatz hierbei ist es, die Reaktion eines Ausbreitungskanals auf eine gegebene Signalform, üblicherweise ein Impuls (die Reaktion wird dann als Impulsantwort bezeichnet), in zeitlich möglichst kurzen Abständen, in denen sich der Übertragungskanal zeitlich verändert, zu messen. Eine Übersicht über Strukturen und Funktionsweisen solcher Channel-Sounder ist zu finden in "Wireless Communications", 2nd ed. , Andreas F. Molisch, ISBN 978-0-470-74186-3, Wiley and Sons Ltd., S. 145-164.

Weiterführende Konzepte sehen eine räumlich differenzielle Betrachtung der Impulsantworten vor, was auch als vektorielles Channel-Sounding bezeichnet wird, wie es zum Beispiel in DE 197 41 991 C1 gezeigt wird.

Auch die Patentschrift DE 10 2004 041 121 B3 beschäftigt sich mit einer räumlich aufgelösten, zeitvarianten Betrachtung von Kanälen, die Mehrwegeausbreitung unterliegen.

Die US 2008/0130790 A1 offenbart ein Verfahren zum Einmessen eines Mehrfach-Antennen-Systems zur Phasenkompensation und Frequenzkompensation. Mehrere Antennen werden mit Trainingssignalen betrieben und von Empfängern werden die Trainingssignale aufgefangen und analysiert.

Die Konzepte sind auf die Untersuchung von Navigationssignalen jedoch nicht ohne weiteres sinnvoll übertragbar, da die Charakterisierung von Ausbreitungskanälen mit typischen Größen aus der Nachrichtentechnik wie einer Maximallaufzeit oder einem Delay-Spread, bzw. die Kenntnis einer ganzen Impulsantwort oft nicht erforderlich ist.

Grundsätzlich sind bei solchen Mehrwegeausbreitungen von Navigationssignalen die Einflüsse statischer Streuobjekte, z.B. Flughafengebäude, in der Planung eines Flughafens bereits berücksichtigt und können auch teilweise durch eine intelligente Auswertung der Signale minimiert werden. Andererseits ist der Einfluss beweglicher Objekte, z.B. der Flugzeuge auf dem Rollfeld eines Flughafens, aufgrund der Vielzahl von Anordnungen und Konfigurationen schwieriger zu bewerten. Insbesondere die zunehmende Größe von Passagierflugzeugen stellt ein kritisches Reflexionspotenzial dar mit Einfluss auf die Integrität des vom Instrumenten-Lande-System (ILS) abgestrahlten Landekurses.

Um solche ILS-Schutzzonen zur Vermeidung solcher Reflexionen hinsichtlich Sicherheit und Wirtschaftlichkeit planen zu können, ist die Kenntnis von Streuverhalten entsprechender Störobjekte jedoch unverzichtbar.

Komplexe Systeme stehen jedoch zur Planung und Auswertung, insbesondere der Vermessung nicht in beliebiger Weise zur Verfügung. Die erwünschten Messungen sind an einem realen Flughafen wirtschaftlich kaum darstellbar.

Allerdings kann das exakte Streuverhalten großer und ggf. sich bewegender Objekte unter nicht idealen Randbedingungen, wie z.B. der einer ebenen einfallenden Welle, nicht immer simulationstechnisch berechnet werden, wie auch im o.a. Fall des Instrumenten-Lande-Systems. Und auch entsprechende Messungen an realen Flughäfen gestalten sich äußerst schwierig, einerseits aufgrund der eingeschränkten Verfügbarkeit während des regulären Flugbetriebs, und andererseits, weil die sehr komplexe Flughafenumgebung in ihrer Gänze der Reflexionsobjekte kaum reproduzierbar zu erfassen und damit nicht auf ein einziges zu untersuchenden Objekt reproduzierbar zu beschränken ist.

Nicht zuletzt sind erforderliche Messungen in einem so großen Parameterraum (Position und Ausrichtung verschiedener Flugzeuge und ggf. Bewegungen) wirtschaftlich an einem realen Flughafen nicht darstellbar.

Eine effektive Alternative zu Simulationen und Messungen an realen Flughäfen stellt die elektromagnetische Skalierung einer solchen Reflexionsumgebung dar. Es werden daher Messungen in skalierten Umgebungen vorgenommen. Nach dem physikalischen Grundprinzip der Skalierbarkeit für dispersionsfreie Materialien, wobei das Streuverhalten von Objekten nur von dem Verhältnis der Objektabmessungen und der Wellenlänge abhängt, kann das das eigentlich zu untersuchende Reflexionsszenario in eine üblicherweise verkleinerte Umgebung bei entsprechender Erhöhung der Frequenz übertragen werden.

Eine solche verkleinerte Umgebung hat nicht nur den Vorteil der uneingeschränkten Verfügbarkeit, sie erlaubt zudem auch die Reduzierung der komplexen Flughafenumgebung nur auf das tatsächlich zu untersuchende Streuobjekt, wie z.B. ein Flugzeug im Rollverkehr. In der Dissertation des Erfinders ("Skalierte Messungen zu bistatischen Radarquerschnitten und Landekursverfälschungen des ILS", Robert Geise, ISBN 978-3869555706) wird die Realisierung einer skalierten Messumgebung für das Instrumenten-Lande-System mit einem Skalierungsfaktor von 1:144 vorgestellt, d.h. statt der Originalfrequenz des Landekurssignals um 110 MHz wird ein skaliertes ILS bei 15.9 GHz betrieben.

Skalierte Messumgebungen haben nicht nur den Vorteil, dass sie jederzeit verfügbar sind und mit wirtschaftlich geringem und damit akzeptablen Aufwand betrieben werden können. Sie erlauben auch das Nachstellen von Situationen, die in der Realität gar nicht, nur mit hohem Aufwand oder mit hohem Risiko darstellbar sind, wie z.B. mögliche Ausbau- oder Umbauvorhaben an Flughäfen oder Notlande-Szenarien aus nicht idealen Anflugrichtungen.

Während die Skalierung der Reflexionsobjekte eine rein mechanische maßstabsgetreue Verkleinerung ist, ist die Nachbildung von Navigationsquellen mit entsprechenden Navigationssignalen bei skalierten höheren Frequenzen eine technisch wesentlich anspruchsvollere Aufgabe, die sich grundsätzliche in zwei wesentliche Komponenten unterteilen lässt. Zum einen ist es erforderlich, die Abstrahlcharakteristik der ursprünglichen Navigationsquelle zumindest in dem relevanten Abstrahlwinkelbereich möglichst genau mit der skalierten Antenne nachzubilden, da die Reflexionseigenschaften eines Streuobjekts zwangsläufig auch davon abhängen, wie es angestrahlt wird. Eine solche Diagrammformung eines skalierten Trägersignals in einer skalierten Messumgebung kann bereits entsprechend gut nachgebildet werden, hierzu hat der Erfinder bereits eine weitere Anmeldung eingereicht.

Zum anderen ist es auch entscheidend, die entsprechende Navigationsinformation mit eben dieser Abstrahlcharakteristik in Form einer differentiellen Raum- bzw. Ortsinformation zu verbinden. Naheliegend ist es dabei zunächst, das gleiche Modulationsverfahren wie bei der nachzubildenden Quelle zu verwenden. Entsprechend nutzt der Stand der Technik ("Skalierte Messungen zu bistatischen Radarquerschnitten und Landekursverfälschungen des ILS", Robert Geise, ISBN 978-3869555706) die Frequenzinformation zur empfangsseitigen Differenzierung zwischen den Signalen und der Zuordnung zu bestimmten Sendeeinrichtungen.

Allerdings wird diese Methodik bedingt durch die deutlich höheren Frequenzen einerseits technisch sehr aufwändig. Andererseits stellt sie auch entsprechende Anforderungen an die Empfangseinheit innerhalb des skalierten Messaufbaus, die bzgl. der eigentlichen Messaufgabe durchaus einschränkend wirken können, z.B. in Form langer Messzeiten, wie es im Folgenden anhand der Nachmodellierung des ILS noch erläutert wird. In jedem Fall ist bei den bekannten Verfahren eine entsprechend kleine Auflösungsbandbreite erforderlich, um beide Frequenzkomponenten der unterschiedlichen Sendeeinrichtungen unterscheiden zu können und damit das eigentliche Signal zu erhalten, obwohl eigentlich nur zwei diskrete Amplitudenwerte erforderlich wären. Die Erfassung eines ganzen Spektrums mit entsprechend hoher Auflösung begrenzt die Messgeschwindigkeit erheblich.

Aufgabe der Erfindung ist es daher, reale Quellen in nachgebildeten Systemen einfacher und mit geringerem Aufwand an Messgeräten analysierbar zu machen, so dass die Ausbreitungsinformation erhalten bleibt und andererseits Bewegungseffekte und auch Dopplereffekte mit hoher zeitlicher Auflösung gemessen werden können.

Diese Aufgabe wird gelöst durch Verfahren mit den Merkmalen des Patentanspruchs 1.

Das erfinderische Messverfahren ermöglicht die Analyse der Ausbreitung elektromagnetischer Navigationssignale verschiedenster Navigationsanlagen.

Grundlegend für die Erfindung ist es, diese Navigationssignale generell als eine Überlagerung mehrerer Bestandteile einzelner gerichteter Rauminformationen, die sich ggf. auch zeitlich ändern können, zu verstehen. Diese Betrachtungsweise ist z.B. im Fall des Primärradars einfach nachzuvollziehen, da man jeweilige Hauptstrahlrichtungen der sich drehenden Radarantenne variierenden Zeitpunkten zuordnet. Diese Betrachtungsweise wird bei statischen Navigationsanlagen wie zum Beispiel dem Instrumenten-Lande-System abstrakter, da die einzelnen gerichteten Rauminformationen als Bestandteile des Navigationssignals nicht auf einer Bewegung der Antenne beruhen, sondern auf einer komplexeren Speisung von Elementen einer Gruppenantenne. Grundsätzlich ist aber auch diese sich daraus ergebende räumliche Modulation eines komplexeren Navigationssignals darauf zurückzuführen, dass verschiedene Antennen zu variablen Zeitpunkten unterschiedlich angeregt werden. Als weiteres Beispiel kann auch das Mikrowellen-Lande-System als eine elektronisch schwenkbare Gruppenantenne (phased array) angeführt werden. Die zeitlich veränderbare Hauptstrahlrichtung wird durch einen entsprechend zeitlich vari ierenden Phasenversatz von Einzelstrahlen eingestellt. Auch hierbei können diese vorgegeben, ggf. diskretisierten Hauptstrahlrichtungen als mehrere, zeitlich unterschiedlich angesteuerte Bestandteile der Navigationssignale verstanden werden. Auch die Funktionsweise des Drehfunkfeuers lässt sich auf diese Weise interpretieren.

Zur Implementation eines beliebigen Navigationssystems in eine Messumgebung wird nun erfindungsgemäß jedem solcher zuvor genannter Navigationssignalbestandteile wenigstens eine Stellvertreter-Sendeeinrichtung zugeordnet. Diese Stellvertreter-Sendeeinrichtungen werden zeitweise zeitversetzt betrieben, wobei jeder Stellvertreter-Sendeeinrichtung gemäß einem Aspekt der Erfindung wenigstens eine charakteristische sendefreie Vorlauf-Pausendauer und/oder sendefreie Nachlauf-Pausendauer zugeordnet wird. Die Navigationssignale, die sich bei einem Navigationssystem durch Ort bzw. Raumrichtung und Frequenz unterscheiden können, werden also Stellvertreter-Sendeeinrichtungen zugeordnet, welche diese NavigationssignalBestandteile in ein Szenario mit im wesentlicher gleicher Frequenz, jedoch unterschiedlicher Signalabfolge umsetzen, also "nachvollziehen". Gemäß einem zweiten Aspekt der Erfindung werden die Stellvertreter-Sendeeinrichtungen wenigstens zeitweise zeitversetzt betrieben, wobei jeder Stellvertreter-Sendeeinrichtung gemäß einem Aspekt der Erfindung wenigstens eine charakteristische Sendedauer, also eine Zeitdauer mit aktiver Abstrahlung, zugeordnet wird.

Wesentlich ist, dass die Unterscheidung der von einer Sendeeinrichtung nachvollzogenen Navigationssignalbestandteile durch eine Unterscheidbarkeit des zeitlichen Speiseschemas erreicht wird. Dabei kann sowohl die Zeit zwischen den aktiven Sendephasen (also die Pausenzeit) als auch die Dauer der aktiven Sendephasen selbst zur Charakterisierung und als Identifikationsmerkmal eingesetzt werden.

Zwischen den Betriebsphasen der Stellvertreter-Sendeeinrichtungen werden entsprechend charakteristische sendefreie Vorlauf-Pausendauern und/oder sendefreie Nachlauf-Pausendauern eingehalten und/oder die Einrichtungen werden mit charakteristischer Sendedauer Betrieben.

Der Begriff "charakteristische Pausendauer" bedeutet in diesem Zusammenhang, dass eine Zuordnung der Stellvertreter-Sendeeinrichtung und ihrer nachvollzogenen Navigationssignalbestandteile zu der Pausendauer möglich ist. Anhand einer Pausendauer oder einer Folge von Pausendauern, unterbrochen von den Sendephasen der Sendeeinrichtungen, sind die jeweilige Stellvertreter-Sendeeinrichtung und das nachvollzogene Signal (eines realen Navigationsbestandteils) identifizierbar. Es ist klar, dass bei aufeinanderfolgenden Signalen die Nachlauf-Pausendauer, also die sendefreie Zeit nach der aktiven Phase einer Sendeeinrichtung, die Vorlauf-Pausendauer einer zeitlich nachgeordneten Sendeeinrichtung bildet.

Andererseits bedeutet der Begriff "charakteristische Sendedauer", dass eine Zuordnung der Stellvertreter-Sendeeinrichtung zu ihrer individuellen Sendedauer möglich ist. Anhand einer Sendedauer oder einer Folge von Sendedauern, unterbrochen von den Pausephasen der Sendeeinrichtungen, sind die jeweilige Stellvertreter-Sendeeinrichtung und das zugehörige Navigationssignal identifizierbar.

Erfindungsgemäß ist eine Analyseeinrichtung mit einer Empfangseinrichtung gekoppelt und es wird eine zeitabhängige, Amplitudenerfassung durchgeführt, die einerseits passend zur Sende-bzw. Empfangsfrequenz ist und andererseits eine Identifikation der individuellen zeitlichen Speiseschemata der Stellvertretersendeeinrichtungen ermöglicht.

Eine solche Amplitudenerfassung kann zum Beispiel mit einem Spektrumanalysator auf der bzw. um die Empfangsfrequenz erfolgen, auch im Zero-Span-Modus, da erfindungsgemäß keine Frequenzinformation zur Zuordnung der Stellvertreter-Sendeeinrichtungen erforderlich ist. Ebenso kann die Amplitudenerfassung auch mit einem Oszilloskop unter Einhaltung der minimalen Abtastrate zur Empfangsfrequenz erfolgen.

Wie oben beschrieben, braucht die Zuordnung von zu untersuchenden Signalen (Navigationssignalbestandteilen) zu einer jeweiligen Stellvertreter-Sendeeinrichtung in diesem Zusammenhang nicht 1:1 zu erfolgen. Vielmehr kann eine Stellvertreter-Sendeeinrichtung als eine gegenständliche Einheit durchaus verschiedene Navigationssignalbestandteile nachvollziehen, wobei jedoch dann die Stellvertreter-Sendeeinrichtung mit unterschiedlichen zeitlichen Speiseschemata, also Pausendauern oder Sendedauern auch unterschiedlich gespeist wird, je nach nachvollzogenem Signal. Dies gilt insbesondere, wenn Signale mit identischem Ursprungsort, jedoch unterschiedlicher Signalcharakteristik (z.B. Frequenz) nachvollzogen werden sollen.

Erfindungsgemäß ist die Zuordnung von Navigationssignalbestandteilen zur zeitlichen Charakteristik eindeutig, eine Stellvertreter-Sendeeinrichtung kann jedoch mit unterschiedlichen zeitlichen Charakteristiken gespeist werden. Die Abstrahlung verschiedener Signalkomponenten durch eine einzige Sendeeinrichtung kann zum Beispiel erfolgen, indem eine Hohlleiterantenne in unterschiedlicher Weise gespeist wird, z.B. von verschiedenen Seiten, dies jedoch mit unterschiedlicher zeitlicher Charakteristik, also charakteristischer Pausendauer oder Sendedauer. Von einer ersten Seite gespeist, wird ein erster Navigationssignalbestandteil nachvollzogen, von einer zweiten Seite gespeist und mit anderer Pausen- oder Sendedauer, wird ein zweiter Navigationssignalbestandteil nachvollzogen.

Der zeitliche Verlauf der empfangenen Amplitudenwerte wird von der Analyseeinrichtung zur Zuordnung der Stellvertreter-Sendeeinrichtung zu Zeitabschnitten der empfangenen Amplitudenwerten ausgewertet, indem die Pausendauern bzw. Sendedauern in dem zeitlichen Verlauf der Amplitudenwerte den Vorlauf-Pausendauern und/oder Nachlauf-Pausendauern der Stellvertreter-Sendeeinrichtung bzw. deren Sendedauern zugeordnet werden.

Ein wesentlicher Vorteil der Erfindung gegenüber o.a. prinzipiellen Konzepten des Channel-Soundings besteht darin, dass zwischen Sende- und Empfangseinrichtung keine Synchronisation (z.B. über Kabel oder GPS) oder Korrelation erforderlich ist, die ggf. technisch sehr aufwändig werden kann. Synchronisation bedeutet hierbei, dass die Empfangseinheit für ihren ordnungsgemäßen Empfangsbetrieb bereits die genaue Information benötigt, zu welchem Zeitpunkt Signale, möglicherweise von verschiedenen Sendeeinrichtungen, gesendet werden. Dass heißt, die Empfangseinheit muss auf genau den Zeitpunkt getriggert werden, bei dem ein breitbandiges Signal auch tatsächlich beim Empfänger ankommt, so dass die empfangsseitig begrenzte Speichertiefe auch für das tatsächlich zu messende Signal genutzt wird.

Genau diese Synchronisation ist erfindungsgemäß nicht erforderlich, da während des regulären Messbetriebs ohnehin eine kontinuierliche Amplitudenerfassung erfolgt und die Zuordnung zu Stellvertreter-Sendeeinrichtungen a posteriori vorgenommen werden kann.

Denn im Gegensatz zu Übertragungskanälen aus der klassischen Nachrichtentechnik, die wegen hoher Übertragungsraten zwangsläufig sehr breitbandig charakterisiert werden müssen, können die Übertragungskanäle von Navigationssystemen als eher schmalbandig angesehen werden, was die empfangsseitig erforderliche Speichertiefe und damit auch die Anforderung an eine Synchronisation deutlich reduziert.

Daher ist es sendeseitig auch nicht erforderlich, eine spezielle breitbandige Signalform wie einen kurzen Impuls zu erzeugen, da erfindungsgemäß die Verwendung von CW-Signalen für die Untersuchung, wie sich Navigationssignale ausbreiten und ggf. verfälscht werden, ausreichend ist. Die Erfindung erlaubt es, die Ausbreitung und auch mögliche Verfälschungen von Navigationssignalen verschiedener bzw. beliebiger Navigationssysteme auf einem technisch einfacheren Niveau zu untersuchen.

Das erfinderische Konzept kann auf beliebige Navigationsanlagen angewendet werden.

Um eine rasche zeitliche Erfassung und damit die zeitvariante Mehrwegeausbreitung eines Navigationssignals zu ermöglichen, wird erfindungsgemäß vorgeschlagen, Signale zeitaufgelöst und mit hoher Bandbreite zu detektieren. Eine Unterscheidbarkeit realer Navigationssignalbestandteile kann im Frequenzbereich oder einem sonstigen Merkmal liegen. Diese charakteristischen Merkmale der Navigationssignalbestandteile werden erfindungsgemäß in eine Unterscheidbarkeit im Zeitbereich überführt, so dass die empfangenen Signale mit größerer Bandbreite, z. B. im Zero-Span-Betrieb eines Spektrumanalysators zu empfangen sind und daher eine deutlich höhere Zeitauflösung ermöglichen. Alternativ ist, je nach Messfrequenz, auch ein Umsetzen bzw. Heruntermischen mit separaten Mitteln und eine nachfolgende Auswertung, z.B. durch ein Oszilloskop möglich.

Erfindungsgemäß werden die Sender zeitversetzt und ohne zeitliche Überschneidung in einem Zeitschema gespeist, so dass immer nur eine Stellvertreter-Sendeeinrichtung bzw. Antenne aktiv ist. Die Information, welche Antenne aktiv ist, wird durch die Auswertung im Zeitbereich ermöglicht, indem charakteristische Pausendauern oder Sendedauern zwischen den Signalen der Antennen eingehalten werden. Auf diese Weise kann das Basisband mit einer deutlich höheren Zeitauflösung ausgewertet werden. Durch die zeitliche Abfolge kann eine Stellvertreter-Sendeanordnung bzw. Sendeantenne mit ihrer entsprechenden räumlichen Ausrichtung und damit ihrem Bestandteil einer differentiellen Ortsinformation identifiziert werden, womit sich dann z.B. die Navigationsinformation bzw. eine mögliche Verfälschung bestimmen lässt.

Wesentlich für die Erfindung ist es, dass unterschiedliche Signale als Bestandteil einer Navigationsinformation nicht anhand ihrer Frequenz, sondern an der sendefreien und signalfreien Vorlauf-Pausendauer oder Nachlauf-Pausendauer oder aber auch anhand der Sendedauer einer Antenne identifiziert werden.

Die Zuordnung von Teilen eines zeitlichen Signalverlaufs zu unterschiedlichen Stellvertreter-Sendeeinrichtungen (mit ggf. verschiedenen räumlichen Ausrichtungen) ist auf dieses Weise möglich, obwohl alle Stellvertreter-Sendeeinrichtungen mit der gleichen Frequenz betrieben werden können, so dass mit einem entsprechend breitbandigen Filter, also hoher Abtastrate gemessen werden kann. Es ist in diesem Zusammenhang nicht zwingend erforderlich, dass die Sender mit identischer Frequenz senden, wenn sie dies jedoch tun, ist eine Unterscheidung anhand der Pausendauer zwischen den Signalen oder anhand der Sendedauer (Signaldauer) möglich.

Vorzugsweise wird das erfindungsgemäße Verfahren eingesetzt zur Skalierung der Landekursinformationen von Instrumenten-Lande-Systemen. Ausgehend vom Stand der Technik bzgl. der Skalierung des ILS wird im Folgenden die Erfindung erläutert.

Beim Landekurs des Instrumenten-Lande-Systems wird die differentielle Ort- bzw. Navigationsinformation, die laterale Abweichung zur Landebahnmitte, durch die räumliche Amplitudenmodulation (AM) einer Gruppenantenne erzeugt. Die Auswertung der durch die AM erzeugten Seitenbänder im empfangenen Frequenzspektrum ist dabei das Maß für die Abweichungen zur Landebahnmitte (engl. difference in depth of modulation, ddm). Ein wesentlicher Abstraktionsschritt bei der skalierten Nachbildung des ILS, der auch in o.a. Publikation vollzogen wurde, ist, dass nur die Abstrahlcharakteristik dieser beiden Seitenbänder nachmodelliert wird. Eine technisch aufwändige Modulation eines Trägersignals wird dabei ersetzt durch zwei einzelne, räumlich entsprechend ausgerichtete Antennen, die die Seitenbänder repräsentieren und mit einem leichten Frequenzversatz senden, um unterschieden werden zu können. Im Fall der skalierten Nachbildung eines ILS handelt es sich um zwei Antennen, die spiegelsymmetrisch leicht versetzt, links und rechts von der Landebahnmitte abstrahlen. Wird dieser leichte Frequenzversatz in der skalierten Umgebung nachvollzogen (z. B. 15,9 GHz und 15,9 GHz + 1,5 kHz) so ist zur Unterscheidung der Senderantennen an einem bestimmten Empfangsort immer ein Spektrum von Signalen auszuwerten und zu speichern. Im vorgenannten Beispiel wird ein 3 kHz breites Spektrum aufgenommen um mögliche Frequenzdrift zu berücksichtigen. Hierbei ist eine entsprechend kleine Auflösungsbandbreite von 300 Hz erforderlich, um beide Frequenzkomponenten unterscheiden zu können und damit das eigentliche skalierte Navigationssignal zu erhalten. Grundsätzlich sind dazu aber nur zwei diskrete Amplitudenwerte erforderlich. Die Erfassung eines ganzen Spektrums mit entsprechend hoher Auflösung begrenzt allerdings die Messgeschwindigkeit erheblich.

In einer bevorzugten Ausführungsform der Erfindung wird die Ausbreitung der elektromagnetischen Navigationssignale mit Hilfe der Stellvertreter-Sendeeinrichtungen in skalierten Messumgebungen analysiert. Zwar werden die den Navigationssignalen zugeordneten Stellvertreter-Sendeeinrichtungen weiterhin mit skalierten, höheren Frequenzen betrieben, jedoch wird der Empfang mit hoher zeitlicher Auflösung und größerer Bandbreite vorgenommen. Die Differenzierung in ein aufgelöstes Spektrum wird aufgegeben und stattdessen werden die im Bandbreitenbereich erfassten Amplituden ausgewertet. Da in diesem Amplitudensignal jedoch keine Frequenzzuordnung des Signals mehr möglich ist, werden erfindungsgemäß die Identifikationsinformationen in den Pausenzeiten codiert.

Zur Auswertung der Signale, also in der Analyseeinrichtung, kann in Abhängigkeit von der Frequenz der empfangenen Signale zunächst eine Frequenzumsetzung erfolgen. Beispielsweise können die Signale mit Hilfe eines Mischers auf eine deutlich kleinere Zwischenfrequenz heruntergemischt werden, um mittels herkömmlicher Analog-Digital-Technik oder einem Oszilloskop im Zeitbereich auswertbar zu sein. Alternativ kann ein Spektrumanalysator verwendet werden, bei dem ein Umsetzen innerhalb des Gerätes vorgesehen ist. Die erste Variante der Analyseeinrichtung könnte eine höhere zeitliche Auflösung ermöglichen, da die Zwischenfrequenzfilterbandbreite handelsüblicher Spektrumanalysatoren bei einigen 10 MHz liegt.

Im Rahmen der Erfindung ist es außerdem grundsätzlich möglich, auch die Signaldauer unterschiedlich zu gestalten, um eine weitere Identifikationsmöglichkeit der sendenden Antennen zu bieten. Außerdem können die Pausen so in Abhängigkeit von der Anzahl der Antennen gewählt werden, dass bereits anhand einer einzigen Pause vor einem Amplitudensignal die Herkunft des Signales bestimmbar ist. Allerdings kann auch die Auswertung mehrerer Pausen erforderlich sein, um die Signale zuzuordnen.

In Abhängigkeit von der Erfassungsgeschwindigkeit, der Signallaufzeit bei Mehrwegeausbreitungspfaden und der Frequenzen sind die Unterschiede der Pausenzeiten so zu wählen, dass in jedem Fall eine deutliche Unterscheidung möglich ist. Bei typischen skalierten Umgebungen kann z. B. davon ausgegangen sein, dass bei Mehrwegeausbreitung von 100 m die Laufzeit und Änderung kleiner als 1 µs ist. Pausenzeiten zwischen den Signalen könnten hier z. B. zwischen einigen 10 µs und 1 ms betragen, wobei sich die Pausenzeiten selbst um beispielsweise 10 % bis 100 % unterscheiden.

Die Stellvertreter-Sendeeinrichtungen können mit identischer Frequenz betrieben werden oder mit unterschiedlicher Frequenz, die sich jedoch in der Erfassungs-Bandbreite der Empfangseinrichtung befindet. Bei unterschiedlichen Frequenzen kann zusätzlich zu der erfindungsgemäßen Auswertung eine parallele oder auch zeitversetzte Auswertung mit Erfassung eines Frequenzspektrums erfolgen. In diesem Fall sind die Signale der Stellvertreter-Sendeeinrichtungen sowohl im Frequenzraum als auch durch ihr Speiseschema bzw. Zeitschema zu unterscheiden. Bei Abstrahlung auf derselben Frequenz kann die zu erfassende spektrale Bandbreite reduziert werden und regelmäßig kann ein verbessertes Signal/Rauschverhältnis erzielt werden.

In einer bevorzugten Weiterbildung der Erfindung werden mehrere Sender entlang einer beliebigen Abstrahlfront angeordnet und diese Sender werden zeitversetzt und zyklisch zum Senden angesteuert, wobei jedem Sender eine charakteristische sendefreie Vorlauf-Pausendauer und/oder charakteristische sendefreie Nachlauf-Pausendauer zugeordnet wird.

Beispielsweise ist mit diesem System eine im realen System erfolgende Bewegung einer einzigen Sendeeinrichtung, z. B. die Drehung einer Radarantenne nachvollziehbar. Die Sender werden dann entlang einer Kreislinie angeordnet und umlaufend, mit jeweils charakteristischer Pausendauer vor und nach Ansteuerung aktiviert. Auf diese Weise ist eine skalierte Vermessung von sich bewegenden Sendeeinrichtungen möglich. In diesem Fall wird also die Bewegung einer einzigen Antenne im realen System durch eine Mehrzahl von Antennen mit identischer Sendefrequenz im skalierten System nachgebildet, wobei die verschiedenen Drehstellungen durch ihre Pausenzeiten identifizierbar sind. Auch die kreisförmige Anordnung der einzelnen Antennen des Drehfunkfeuers an einem Flughafen kann mit dieser Erfindung nachgebildet werden. Ebenso ist es auch möglich, Stellvertreter-Sendeeinrichtung entlang einer Trajektorie eines sich bewegenden Objektes anzuordnen, um ein Navigationssystem nachzubilden, welches sich z.B. auf einem Flugzeug in Bewegung befindet.

In der skalierten Messumgebung ist durch den zeitlichen Verlauf der Antennenspeisung jederzeit nachvollziehbar, zu welchem Messzeitpunkt eine einzelne Antenne der skalierten Navigationsanlage aktiv war. Entsprechend kann das skalierte und ggf. durch Mehrwegeausbreitung verfälschte Navigationssignal in die reale nachgebildete Darstellung des eigentlichen Navigationssignals überführt und ausgewertet werden. Da durch diese Erfindung eine zeitlich schnelle Auswertung der Navigationssignale ermöglicht wird, ist es dann auch möglich, entsprechend schnelle Änderungen der Randbedingungen von Mehrwegeausbreitungen zu untersuchen, wie z.B. sich drehende Windräder oder sich bewegende Flugzeuge.

Mit einem ähnlichen System ist beispielsweise auch eine Sektorantenne aus dem Mobilfunk nachzubilden. Hier würde ein ausgehendes Signal eines Sektors der Antenne durch definierte und erkennbare Pausen vor und nach dem Anlegen des Signals auf der entsprechenden Antenne identifizierbar.

Eine Identifizierung der Stellvertreter-Sendeantenne anhand einer einzigen Pausendauer ist möglich. In einer Weiterbildung der Erfindung werden jeweils mehrere Pausendauern, die durch empfangene Amplitudenwerte getrennt sind, ausgewertet, um die Signalzuordnung zu den Sendeantennen vorzunehmen und zu validieren. Beispielsweise können zwei oder mehrere aufeinanderfolgende Pausendauern, die durch den Empfang von Signalen mit der Empfangseinrichtung getrennt sind, als Pausenfolge eine eindeutige Identifizierung des zwischenliegenden Signales erlauben. Allerdings sind auch weitere Pausendauern auswertbar, wobei die Sicherheit der Erkennung weiter erhöht wird. Diese Weiterbildung der Erfindung bietet sich insbesondere in Umgebungen mit Störungen an oder bei Vorgabe von geringen Unterschieden in den Pausendauern.

In einer bevorzugten Ausführungsform des Verfahrens senden die Stellvertreter-Sendeeinrichtungen Signale im Gigahertz-Bereich aus. In diesem Frequenzbereich spielt das erfindungsgemäße Verfahren seine Vorteile besonders stark aus, da hier die Auswertung bei geringen Frequenzunterschieden die zeitlichen Auflösungsmöglichkeiten besonders beschränkt. Als bevorzugte Ausführungsform des Verfahrens gilt die Verwendung innerhalb skalierter Messumgebungen für z.B. o.a. Navigationsanlagen. Denn durch die Skalierung, also die Verkürzung der Ausbreitungswege, ergibt sich erst ein scharfes Kontrastverhältnis zwischen den Schalt- bzw. Pausenzeiten der einzelnen Antennen und den Signallaufzeiten bei den Mehrwegeausbreitungen unter zeitlich veränderbaren Randbedingungen, die es zu untersuchen gilt.

Grundsätzlich ist dieses Verfahren aber auch in anderen, nicht skalierten Messumgebungen ausführbar, in denen eine Zuordnung eines empfangenen Signals zu einer Sendeeinrichtung bzw. einem Navigationsbestandteil erforderlich oder sinnvoll ist. Das ist prinzipiell in beliebigen Umgebungen denkbar, in denen das Auffinden von Reflexions- bzw. Streuzentren durch Zuordnung von Ausbreitungswegen individueller Sendeeinrichtungen mit vorzugsweisen Hauptstrahlrichtungen erfolgen kann.

Da für diese Zuordnung keine Untersuchung im Frequenzbereich mehr erforderlich ist, ist es erfindungsgemäß und zugunsten einer Messwerterfassung mit hoher zeitlicher Auflösung sinnvoll, die Trägerfrequenz auf eine niedrige Zwischenfrequenz herunterzumischen, deren zeitlicher Verlauf mit hoher Zwischenfrequenzbandbreite dann, z.B. im Zero-Span-Modus mit einem Spektrumanalysator, gemessen werden kann. Die zeitlichen Amplitudenverläufe dieser Zwischenfrequenz, die durch entsprechende Pausenzeiten voneinander unterscheidbar sind, entsprechen dann der jeweiligen Modulation der Trägerfrequenz, wie sie sich durch die Mehrwegeausbreitung ergibt und zwar in Abhängigkeit verschiedener Raumrichtungen, die durch die jeweiligen Hauptstrahlrichtung der aktiven bzw. zugeordneten Antenne vorgegeben ist. Ein konstanter Offset zwischen zwei solchen Amplitudenverläufen würde z.B. bedeuten, dass in einer Ausbreitungsrichtung bzw. Hauptstrahlrichtung eine Reflexion an einem statischen Objekt erfolgt.

Allerdings kann dieser Unterschied auch innerhalb mehrerer Messzyklen variieren, z.B. durch die Bewegung eines eben solchen Reflexionsobjektes. Es sind dann auch zeitliche Variationen denkbar, wenn sich z.B. der Empfänger bewegt, also seine räumliche Lage zu dem Reflexionsobjekt ändert, wobei das Reflexionsobjekt in verschiedene Raumrichtungen auch unterschiedlich stark reflektiert bzw. streut.

Es ist besonders vorteilhaft, wenn die aktive Sendedauer der Sender mit identischer Frequenz gleich ist und eine Unterscheidung nur anhand der Pausenzeiten erfolgt.

Zwar ist grundsätzlich auch eine Variation der einzelnen Sendedauern möglich, es ist jedoch bei der späteren Auswertung dann eine kritische Prüfung durchzuführen, ob die unterschiedliche Pulsdauer in der Amplitudenerfassung mögliche Wechselwirkungseffekte der elektromagnetischen Welle mit der Messumgebung zurückzuführen ist oder auf eine unterschiedliche Abstrahldauer der Antenne. Wird jederzeit jede der Antennen mit gleicher Sendedauer betrieben, so kann sich die Auswertung allein auf die Pausen beschränken und Effekte durch Wechselwirkung der Strahlung im System sind eindeutig identifizierbar.

Die Ansteuerung der Sendeantenne und die Einstellung der Pausendauer bzw. Sendedauer kann sowohl mit HF-Schaltern, ggf. in Form einer Matrix als auch mit Verzögerungsleitungen eingestellt werden. Je nachdem, welche Pausendauern erwünscht sind, können insbesondere geringe Pausendauern mittels Verzögerungsleitungen und größere Pausendauern mit entsprechenden Schalteinrichtungen realisiert werden.

Die Erfindung wird nun anhand der nachfolgenden Figuren näher erläutert.
Figur 1 zeigt eine beispielhafte Messumgebung für die Anwendung der Erfindung;
Figur 2 zeigt in schematischer Weise die Pulsabfolge von zwei Sendeantennen mit gleicher Frequenz und die empfangenen Antworten;
Figur 3 zeigt eine beispielhafte Ausführung der Erfindung zur Nachbildung einer sich drehenden Radarantenne;
Figur 4 zeigt ein Schema eines Meßaufbaus zur Ausführung des erfindungsgemäßen Verfahrens;
Figur 5 zeigt erfindungsgemäß erfasste Meßdaten einer Anordnung mit dem prinzipiellen Aufbau aus Figur 3;
Figuren 6a und 6b zeigen weitere erfindungsgemäß erfasste Meßdaten und daraus abgeleitete Signalverläufe;
Figuren 7a bis 7c zeigen weitere erfindungsgemäß erfasste Meßdaten und daraus abgeleitete Signalverläufe;

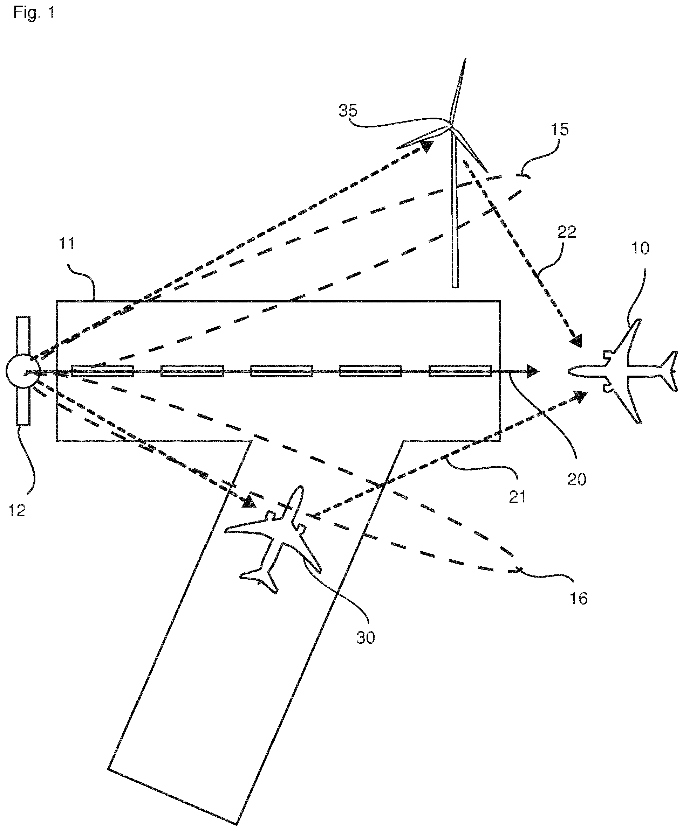

In Figur 1 ist eine Situation auf einem Flughafen dargestellt, die repräsentativ für die Anwendung des erfindungsgemäßen Verfahrens ist.

Ein Flugzeug 10 befindet sich im Landeanflug auf eine Landebahn 11. Ein Navigationssystem (z.B. ILS oder Drehfunkfeuer VOR) 12 sendet Navigationssignale z.B. 15, 16 in verschiedene Raumrichtungen zu ggf. verschiedenen Zeitpunkten aus. Das Flugzeug 10 empfängt die Signale 15 und 16 und kann durch an Bord befindliche Instrumente eine Navigationsinformation gewinnen. Für eine fehlerfreie Auswertung ist jedoch ein weitgehend unverfälschter Empfang entlang eines direkten Ausbreitungspfades 20 erforderlich. Objekte im Flughafenbereich, z.B. ein Flugzeug 30 auf einem Taxiway oder eine benachbarte Windanlage 35 dienen als Störobjekte und streuen Signale zu dem Flugzeug 10 auf gestreuten Ausbreitungspfaden 21 und 22. Die ursprünglich beabsichtige Navigationsinformation kann so verfälscht werden.

Erfindungsgemäß wird zur Analyse dieses Systems den Navigationssignalbestandteilen 15 und 16 jeweils eine Stellvertreter-Sendeeinrichtung zugeordnet. Wird die untersuchte Umgebung in ihrer Größe skaliert, insbesondere verkleinert, so senden diese Einrichtungen maßstabsgerecht bei deutlich höheren Frequenzen als in der realen Umgebung. Die Stellvertreter-Sendeeinrichtungen senden die Signale in die verschiedenen Raumrichtungen, wie in Figur 1 gezeigt. Dabei werden die Stellvertreter-Sender mit identischer Frequenz betrieben, wobei jedoch ein zeitliches Speiseschema eingehalten wird, um charakteristische Pausenzeiten vor- und nach den Signalen einzuhalten. Die an einem möglicherweise zeitlich variablen Untersuchungsort (z.B. Ort des Flugzeuges 10 während eines Landeanflugs) empfangenen Signale werden breitbandig und zeitaufgelöst erfasst. Da die Signale anhand der Pausenzeiten den Antennen zugeordnet werden können, ist eine Unterscheidung an sonstigen Merkmalen nicht erforderlich, daher können die Stellvertreter-Sender auch bei der gleichen Frequenz betrieben werden.

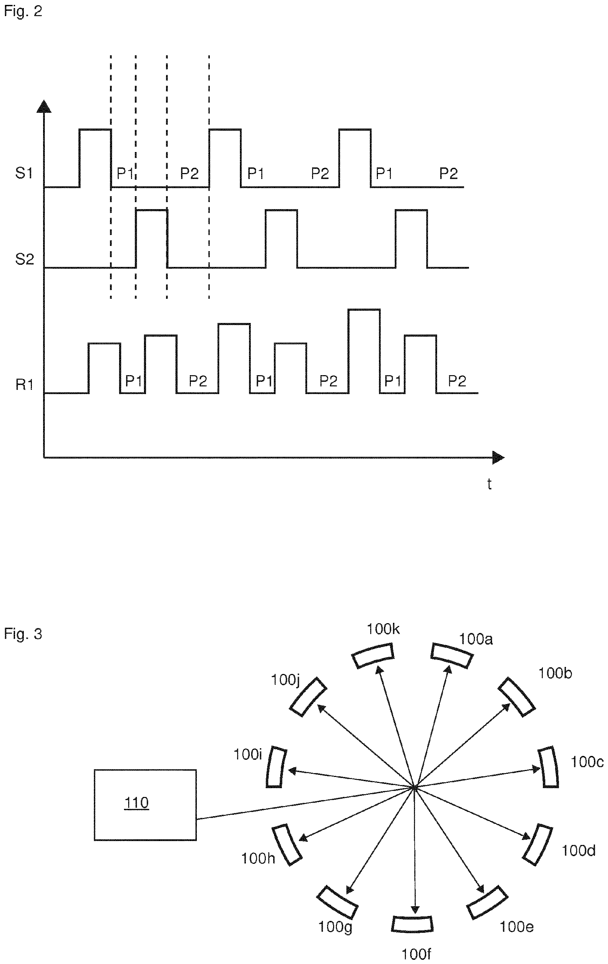

Figur 2 zeigt schematisch eine Folge von Signalverläufen von zwei Sendeantennen S1 und S2. Die Sendeantenne S1 wird angesteuert, um hochfrequente Signale, in diesem Beispiel bei 15,9 GHz auszusenden. Die Antenne wird dabei gespeist, um für eine Sendedauer ein Leistungsprofil abzustrahlen und anschließend eine Sendepause einzuhalten.

In diesem Beispiel handelt es sich bei den Stellvertreter-Sendern um Hohlleitersender, wie sie beispielsweise in der vorgenannten Dissertation beschrieben sind. Geeignet sind beispielsweise geschlitzte Hohlleiter, um die Strahlung in passender Diagrammform auszusenden.

Eine im Wesentlichen gleich ausgebildete Antenne S2 sendet in eine andere Raumrichtung ebenfalls Strahlung für eine Sendedauer aus und hält zwischen den Strahlungsphasen Sendepausen ein.

Die Ansteuerung der Antennen kann über mehrere Signalgeneratoren oder auch mit Hilfe eines einzigen Signalgenerators und Hochfrequenzschaltern erfolgen.

Es ist in Figur 2 erkennbar, dass die Zeiten, zu denen eine der Antennen sendet, sich in diesem Beispiel nicht mit Zeiten überschneidet, in denen die andere Antenne sendet. Zwischen den jeweiligen Sendephasen sind daher Pausenzeiten ausgebildet, die in der Figur 2 mit der Bezeichnung P1 und P2 versehen sind. P1 ist die Pausendauer, die sich vom Ende einer Sendephase der Antenne S1 bis zum Beginn einer Sendephase der Antenne S2 erstreckt. P2 ist die Pausendauer, die sich vom Ende der Sendephase der Antenne S2 bis zum Beginn der Sendephase der Antenne S1 erstreckt.

Es ist ersichtlich, dass die Pausendauern P1 und P2 unterschiedlich sind und auf diese Weise eine Sendephase durch die davor und/oder danach liegende Pausendauer identifizierbar ist. Das auf Seiten des Empfängers R1 empfangene Signal ist schematisch im unteren Abschnitt der Figur 2 dargestellt. Aufgrund von unterschiedlichen Wechselwirkungen der Abstrahlung von den unterschiedlichen Antennen wird das empfangene Signal (Amplitude) der unterschiedlichen Antennen selbst bei gleicher Sendeleistung nicht identisch sein. Außerdem können zeitlich veränderliche Wechselwirkungen im System auftreten, so dass sich ein zu dem Empfänger R1 gezeigter Amplitudenverlauf erfassen lässt.

Obwohl die Amplitudenstärke keine Rückschlüsse auf die aussendende Antenne zulässt, da die aussendenden Antennen beide mit identischer Frequenz senden, ist die Identifikation der aussendenden Antenne anhand der erfassten Pausendauern im Zeitverlauf möglich. Durch die Abfolge der Pausen oder auch die Messung einer einzelnen Pausenlänge kann das nachfolgende Signal oder das vorausgehende Signal einer der Antennen zugeordnet werden. Es ist möglich, dass sich durch Wechselwirkungen im System bzw. Signallaufzeiten die erfassten Amplitudendauern nicht vollständig mit den Sendedauern der Antennen decken. Eine Zuordnungsgenauigkeit kann daher erhöht werden, indem mehrere nacheinander folgende Pausenfolgen ausgewertet und die zwischenliegenden Impulse auf Basis dieser mehreren Pausendauern identifiziert werden. Selbst wenn durch Wechselwirkungseffekte im System einzelne Signale oder eine Folge von Signalen gänzlich im Rauschen der Erfassungseinrichtung untergeht, ist danach jederzeit wieder die Zuordnung aufzunehmen, sobald wieder identifizierbare Amplitudenwerte erfasst werden.

In Figur 1 können die Antennen beispielsweise am gleichen Ort eingerichtet sein, jedoch in unterschiedlichen Raumrichtungen mit ihrer Abstrahlrichtung orientiert sein.

Figur 3 zeigt eine alternative Anordnung der Antennen mit zugehörigem Schaltkonzept. Die Antennen 100a, 100b,..., 100k sind entlang einer Kreisbahn im äquidistanten Abständen angeordnet, so dass ihre Abstrahlrichtung radial nach außen gerichtet ist. Diese Antennen können mit einer HF-Schaltmatrix 110 nacheinander zum Senden aktiviert werden, wobei ein zyklischer Umlauf der Aktivierung erreicht wird. Auf diese Weise kann durch die beispielsweise dargestellten elf Antennen, welche hier ebenfalls geschlitzte Hohlleiter sein können, ein Radarsystem als drehbare Antenne nachgestellt werden. Dies hat den Vorteil, dass jeder bekannten Drehrichtung des Originalsystems eine Antenne im skalierten System zugeordnet ist. Diese Antenne ist jeweils wieder bei den empfangenen Signalen identifizierbar, indem die Pausendauern zwischen den empfangenen Signalen ausgewertet werden. Auch in diesem Beispiel ist es möglich, mehrere Pausendauern auszuwerten, um Rückschlüsse auf die Herkunft des erfassten Signals zu ziehen. Eine ähnliche Ausführungsform würde man z.B. auch wählen, um die einzelnen Antennen des Drehfunkfeuers an einem Flughafen nachzubilden, um so Ausbreitungseigenschaften in verschiedene Raumrichtungen messen und anschließend in das ursprüngliche Navigationssignal, welches ggf. verfälscht werden kann, wieder zusammenfügen zu können.

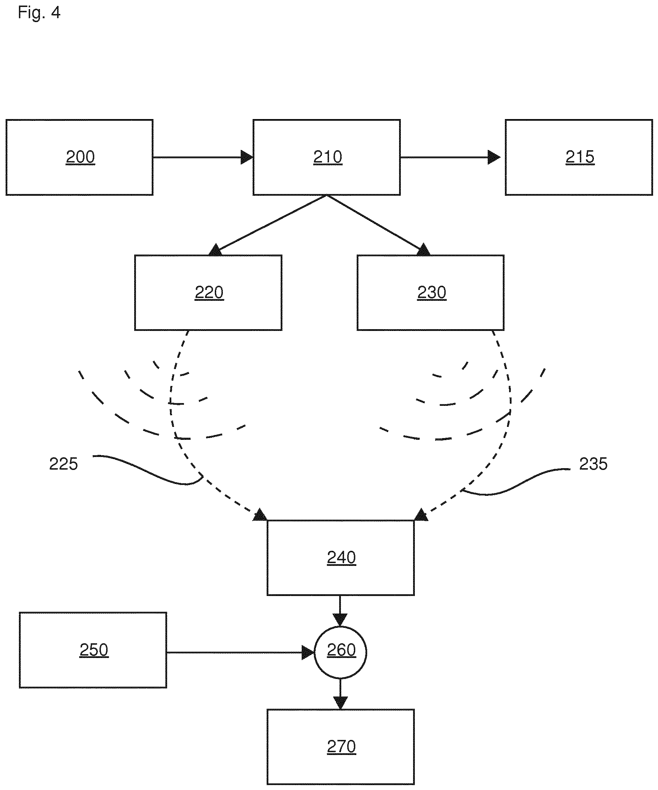

Figur 4 zeigt in Gestalt eines Blockschemas einen Messaufbau, wie er für die Ausführung des erfindungsgemäßen Verfahrens einsetzbar ist.

Ein Oszillator 200 liefert eine Anregungsfrequenz, hier z.B. eine Frequenz von 16 GHz. Das Signal vom Oszillator 200 wird in einen HF-Schalter 210 gespeist, welcher erfindungsgemäß nach einem vorgegebenen Zeitschema wechselweise die als Hohlleiter ausgebildeten Antennen 220 und 230 speist. Zum Realisieren der Pausenzeiten, also die Zeiten, in denen keine Antenne 220 und 230 gespeist wird, ist es sinnvoll, den HF-Schalter auf einen nicht abstrahlenden 50 Ohm Abschluss 215 schalten zu lassen, so dass der Oszillator im ständigen CW-Modus betrieben werden kann und selbst nicht geschaltet werden muss. Dabei werden die erfindungsgemäß vorgesehenen Signaldauern und Pausenzeiten eingehalten, die jeder Sendeeinrichtung zugeordnet sind.

Von den Antennen 220 und 230 gelangen die Signale auf unterschiedlichen Ausbreitungswegen 225 bzw. 235 durch die Messumgebung zu einer Empfangsantenne 240. Da die Signale der Antennen 220 und 230 von derselben Quelle gespeist werden (dem Oszillator 200) ist anhand der empfangenen Signale zunächst keine Zuordnung zur Quelle möglich.

Mit Hilfe eines Mischers 260 und einer weiteren Oszillatorquelle 250 wird das Signal auf eine Zwischenfrequenz heruntergemischt. Beispielsweise speist der Oszillator 250 eine gegenüber der Frequenz des Oszillators 200 um 100 kHz verringerte Frequenz in den Mischer ein, so dass die Zwischenfrequenz 100 kHz beträgt.

Mit Hilfe einer Auswerteeinrichtung 270 wird das heruntergemischte Signal ausgewertet. Dabei wird das Zeitschema der Speisung genutzt, um die empfangenen Signale bzw. den gemessen zeitlichen Amplitudenverlauf den Sendeeinrichtungen 220 und 230 zuzuordnen.

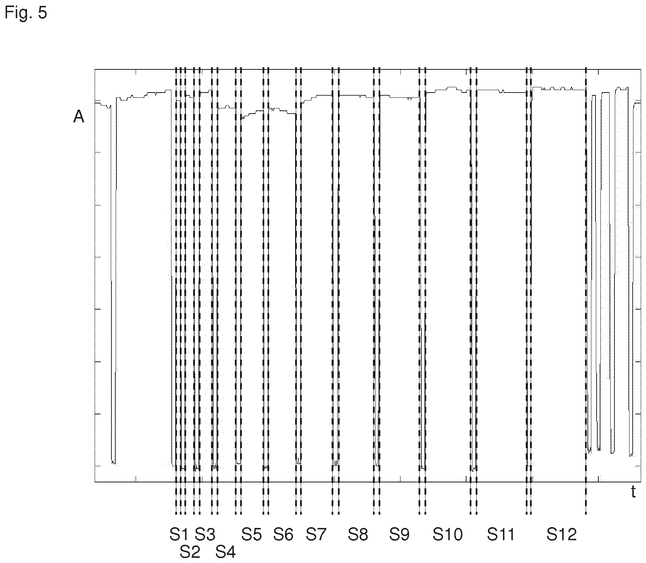

Figur 5 zeigt eine reale Messkurve, welche mit einer Anordnung ähnlich Fig. 3 gemessen wurde. Entlang einer Kreislinie sind zur Nachbildung eines Drehfunkfeuers/Radars zwölf Sendeantennen angeordnet worden, welche zeitversetzt angesteuert werden. Jede der Sendeantennen wird für eine charakteristische Dauer zum Senden angeregt. Die Detektion erfolgt in diesem Beispiel mit einem Spektrumanalysator im Zero-Span-Betrieb. Figur 5 zeigt die zeitliche Amplitudenstärke, wie durch die Empfangsantenne erfasst und nach Mischung auf eine Zwischenfrequenz.

Es ist erkennbar, dass Signaldauern S1, S2,... ,S12 deutlich unterscheidbar sind. Da senderseitig bekannt ist, welche der Stellvertreter-Sendeeinrichtungen mit welcher Sendedauer betrieben wurde, ist eine rasche und zeitaufgelöste Erfassung möglich und es wird dennoch die Quelleninformation erhalten. In diesem Beispiel ist jede der Antennen mit einer anderen Sendedauer (Unterschiede z.B. 10ms) angesteuert worden, die Pausenzeiten zwischen den Ansteuerungen blieben jedoch identisch.

Anhand der Daten ist es möglich, die Amplitude jeder Stellvertreter-Sendeeinrichtung am Empfangsort zu bestimmen, wobei jede Stellvertreter-Sendeeinrichtung einer Winkelstellung des Radars oder einem Ansteuerzeitpunkt des Drehfunkfeuers entspricht.

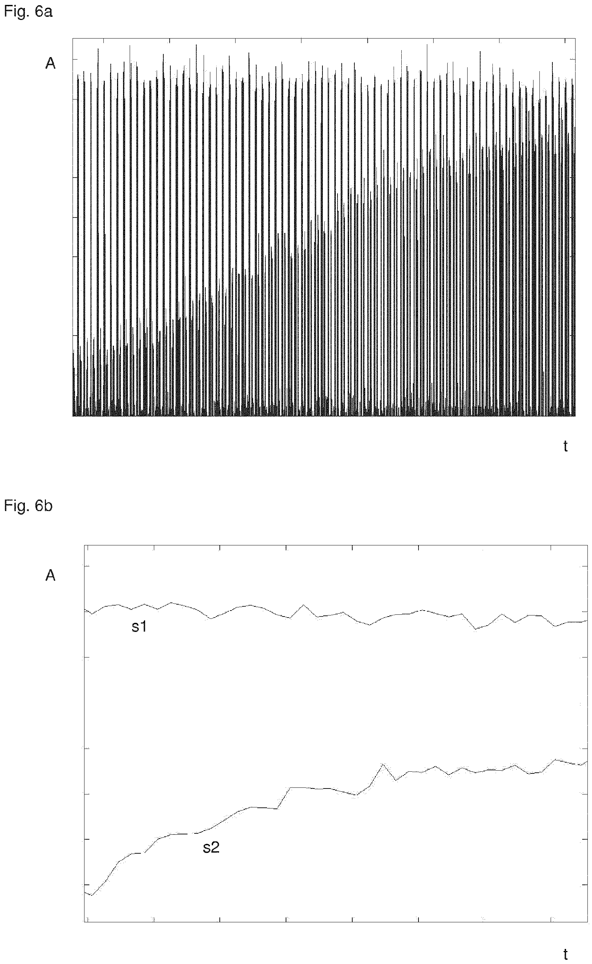

Fig. 6a zeigt eine reale Messung in einer alternativen Messumgebung. Diese Messung zeigt, dass aus einer zeitlich aufgelösten Amplitudenfolge mit zwei Sendeantennen S1 und S2 durch nachträgliche Zuordnung anhand der Zeitschemata eine getrennte Amplitudenkurve gemäß Fig. 6b abzuleiten ist. Es ist erkennbar, dass diese Messmethode mit geringem Messaufwand eine zeitaufgelöste Messung multipler Signalquellen erlaubt und auf diese Weise auch zeitabhängige Auswertungen zulässt.

Insbesondere kann hier bereits die Funktionalität eines robusten mathematischen Algorithmus gezeigt werden, der automatisch aus dem empfangenen zeitlichen Amplitudenverlauf 6a die relevanten Einzelsignale den Stellvertreter-Sendeeinrichtungen zuordnet und ihre auf einem Ausbreitungsweg individuell variierenden Amplituden s1 und s2 extrahiert.

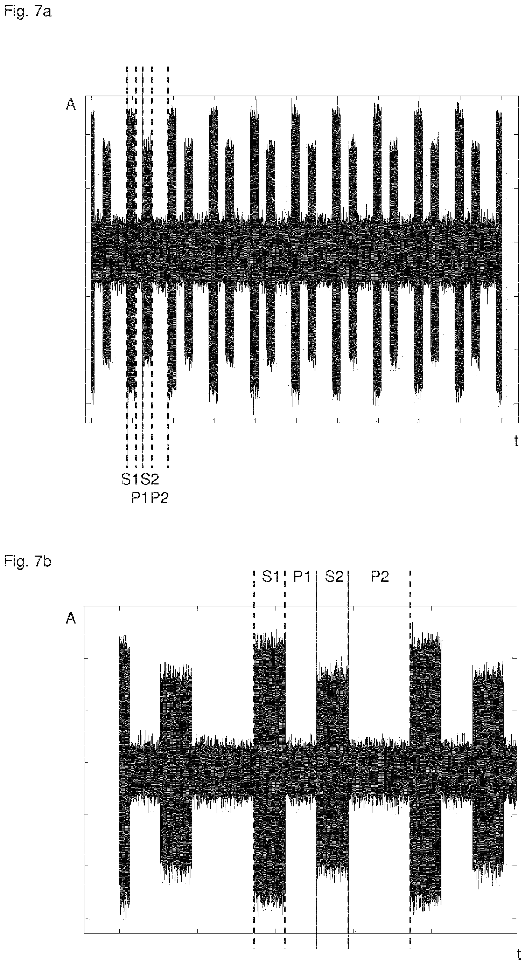

Figur 7a zeigt eine Weiterbildung der Erfindung anhand weiterer realer Messdaten.

In Figur 7a ist eine mit hoher zeitlicher Auflösung erfasste Messkurve dargestellt. Im Unterschied zu den vorherigen Messungen erfolgt die Erfassung hier mit einem Speicher-Oszilloskop. Diese Art der Auswertung erlaubt nun, auch eine gewisse Frequenzinformation auszuwerten. Dies mag zunächst widersprüchlich erscheinen, da ja alle Sendeeinrichtungen im Wesentlichen mit derselben Frequenz betrieben werden. Doch in Abhängigkeit vom Signalweg können die Frequenzen geringfügig verändert werden, insbesondere durch Doppler-Verschiebungen.

Während die Einhüllende der Kurve bereits eine Einteilung in das Zeitschema und damit eine Zuordnung zu den Sendern erlaubt, bieten die Frequenzinformationen zusätzliche Hinweise. In diesem Beispiel erfolgte die Speisung von zwei Stellvertreter-Sendeeinrichtungen mit derselben Sendedauer von 20 ms, es wurden jedoch jeder Antenne charakteristische Nachlauf-Pausendauern zugeordnet, nämlich 20 ms bzw. 40 ms.

Die Einhüllende der Messdaten wird in einfacher Weise in Signalabschnitte (s1, S2) und Pausenzeiten (P1, P2) zerlegt. Anhand dieser Signal- und Pausendauern können die zugehörigen Stellvertreter-Sendeeinrichtungen identifiziert werden. Fig. 7b zeigt hierbei eine Teilvergrößerung aus Figur 7a.

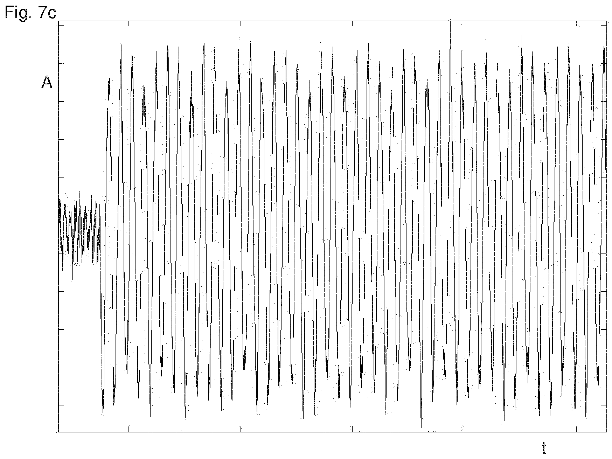

Fig. 7c zeigt wiederum einen Teilausschnitt aus Figur 7b und es wird deutlich, dass zusätzlich auch Informationen über mögliche Doppler-Verschiebungen ermittelt werden können. Dazu werden die Signalpakete (z.B. S1 oder S2) einer Fourier-Analyse unterzogen. Die so gewonnen Information über eine Doppler-Verschiebung kann wiederum anhand der bereits erfolgten Zuordnung der Sendequelle erfindungsgemäß zugeordnet werden.

Die Erfindung ist entsprechend geeignet, durch gezielte Vorgabe von Pausendauern zwischen der Aussendung von Signalen unterschiedlicher Antennen oder anhand der zeitlich charakteristischen Speisung dieser Antennen für charakteristische Sendedauern die Antennen im empfangenen Signal anhand dieser Pausendauern bzw. Sendedauern zu identifizieren und die Signale den Antennen bzw. Raumrichtungen zuzuordnen, was insbesondere bei der skalierten Nachbildung von Navigationsanlagen ein entscheidendes Merkmal zur Untersuchung von Mehrwegeausbreitungen ist. Obwohl bei der vorstehenden Erläuterung auf ILS Bezug genommen wurde, kann die Erfindung auch im Rahmen des fachmännischen Könnens auf andere Navigationssysteme angewendet werden.

## Patentansprüche

1. Messverfahren zur Analyse der Ausbreitung elektromagnetischer Navigationssignalbestandteile,
wobei jedem der Navigationssignalbestandteile (15, 16 wenigstens eine Stellvertreter-Sendeeinrichtung (100a,...,100k; 220, 230) zugeordnet wird,
wobei eine Analyseeinrichtung mit einer Empfangseinrichtung gekoppelt wird und eine zeitabhängige Amplitudenerfassung bei einer ersten Frequenz durchführt, wobei
die Stellvertreter-Sendeeinrichtungen (100a,..., 100k; 220, 230) wenigstens zeitweise zeitversetzt betrieben werden, **dadurch gekennzeichnet,**
**dass** jeder Stellvertreter-Sendeeinrichtung (100a,..., 100k; 220, 230) für jeden ihr zugeordneten Navigationssignalbestandteil ein zeitliches Speiseschema zugeordnet wird, mit
- einer charakteristischen sendefreien Vorlauf-Pausendauer (P1) und/oder sendefreien Nachlauf-Pausendauer (P2), welche zwischen den Betriebsphasen der Stellvertreter-Sendeeinrichtungen (100a,..., 100k; 220, 230) jeweils eingehalten werden,
oder
- mit einer charakteristischen Sendedauer, die in den Betriebsphasen der Stellvertreter-Sendeeinrichtungen jeweils eingehalten werden,
wobei der zeitliche Verlauf der empfangenen Amplitudenwerte von der Analyseeinrichtung zur Zuordnung der Stellvertreter-Sendeeinrichtung (100a,..., 100k; 220, 230) und dem zugeordneten Navigationssignalbestandteil zu Zeitabschnitten der empfangenen Amplitudenwerte ausgewertet wird, indem
- die Pausendauern in dem zeitlichen Verlauf der Amplitudenwerte den Vorlauf-Pausendauern und/oder Nachlauf-Pausendauern der Stellvertreter-Sendeeinrichtung (100a,..., 100k; 220, 230) zugeordnet werden, oder
- die Dauern der empfangenen Signale in dem zeitlichen Verlauf der Amplitudenwerte den Sendedauern der Stellvertreter-Sendeeinrichtung zugeordnet werden,
wobei die Ausbreitung der elektromagnetischen Navigationssignalbestandteile mit Hilfe der Stellvertreter-Sendeeinrichtungen in skalierten Messumgebungen analysiert wird,
wobei die skalierten Messumgebungen gegenüber den zu analysierenden Vorlage-Umgebungen verkleinert sind und
wobei die den Navigationssignalbestandteilen zugeordneten Stellvertreter-Sendeeinrichtungen (100a,..., 100k; 220, 230) mit skalierten, höheren Frequenzen betrieben werden.

2. Verfahren nach Patentanspruch 1, wobei für die Amplitudenerfassung die empfangenen Signale um die erste Frequenz zunächst auf eine niedrigere Zwischenfrequenz umgesetzt werden, bevor die Amplitudenauswertung erfolgt.

3. Verfahren nach einem der Ansprüche 1 bis 2, wobei die Stellvertreter-Sendeeinrichtungen mit einer identischen ersten Frequenz betrieben werden.

4. Verfahren nach Anspruch 1 bis 3, wobei die Stellvertreter-Sendeeinrichtungen mit verschiedenen Frequenzen betrieben werden, welche innerhalb der Bandbreite der Amplitudenerfassung liegen.

5. Verfahren nach Anspruch 1 bis 4, wobei wenigstens eine Stellvertreter-Sendeeinrichtung mit verschiedenen zeitlichen Speiseschemata gespeist wird, wobei für jedes der Speiseschemata die Einkopplung der Speisung in anderer Weise erfolgt.

6. Verfahren nach einem der vorangehenden Ansprüche, wobei wenigstens einem Navigationssignalbestandteil eine Mehrzahl von Stellvertreter-Sendeeinrichtungen entlang einer variablen Abstrahlfront zugeordnet wird, um eine Stellungsänderung oder Bewegung der Navigationssignalbestandteile abzubilden.

7. Verfahren nach einem der vorangehenden Ansprüche, wobei wenigstens zwei der Stellvertreter-Sendeeinrichtungen zur Abstrahlung in unterschiedliche Raumrichtungen orientiert sind.

8. Verfahren nach einem der vorangehenden Ansprüche, wobei von der Analyseeinrichtung zur Zuordnung der Stellvertreter-Sendeeinrichtungen zu Zeitabschnitten der empfangenen Amplitudenwerte wenigstens zwei aufeinanderfolgende Pausendauern und/oder Signal-Empfangsdauern in den Amplitudenwerten ausgewertet werden.

9. Verfahren nach einem der vorangehenden Ansprüche, wobei die Stellvertreter-Sendeeinrichtungen Signale im GHz-Bereich abstrahlen.

10. Verfahren nach einem der vorangehenden Ansprüche, wobei die Amplitudenerfassung im Zerospan-Modus der Analyseeinrichtung erfolgt.

11. Verfahren nach einem der vorangehenden Ansprüche, wobei entweder die aktiven Sendedauern der Stellvertreter-Sendeeinrichtungen oder die Pausendauern der Stellvertreter-Sendeeinrichtungen gleich sind.

12. Verfahren nach einem der vorangehenden Ansprüche, wobei die zeitliche Ansteuerung der Stellvertreter-Sendeeinrichtungen mit HF-Schaltern und/oder Verzögerungsleitungen erfolgt.

13. Verfahren nach einem der vorangehenden Ansprüche, wobei die Auswerteeinrichtung außerdem zur Auswertung der Frequenz der empfangenen Signale ausgebildet ist, insbesondere um Dopplerverschiebungen auf dem Signalweg zu erfassen.

## Claims

1. A measurement method for analysing the propagation of electromagnetic navigation signal components,
each of the navigation signal components (15, 16) being assigned at least one representative transmission device (100a, ..., 100k; 220, 230),
an analysis device being coupled to a receiver device and performing a time-dependent amplitude detection at a first frequency,
the representative transmission devices (100a, ..., 100k; 220, 230) being operated in a staggered manner, at least sometimes,
**characterised in that**
each representative transmission device (100a, ..., 100k; 220, 230) is assigned a chronological supply schema for each navigation signal component assigned to the representative transmission device, having
- a characteristic transmission-free leading pause duration (PI) and/or transmission-free trailing pause duration (P2) which are maintained between the operating phases of the representative transmission devices (100a, ..., 100k; 220, 230),
or
- a characteristic transmission duration which is maintained in the operating phases of the representative transmission devices,
wherein the time profile of the received amplitude values is evaluated by the analysis device in order to assign the representative transmission device (100a, ..., 100k; 220, 230) and the assigned navigation signal component to time segments of the received amplitude values, by
- assigning the pause durations in the time profile of the amplitude values to the leading pause durations and/or trailing pause durations of the representative transmission device (100a, ..., 100k; 220, 230), or
- assigning the durations of the received signals in the time profile of the amplitude values to the transmission durations of the representative transmission device,
wherein the propagation of the electromagnetic navigation signal components is analysed using the representative transmission devices in scaled measurement environments,
wherein the scaled measurement environments are smaller than the model environments to be analysed, and
wherein the representative transmission devices (100a, ..., 100k; 220, 230) assigned to the navigation signal components are operated at scaled, higher frequencies.

2. The method according to Claim 1, wherein, for the amplitude detection, the received signals around the first frequency are initially converted to a lower, intermediate frequency before the amplitude evaluation takes place.

3. The method according to one of Claims 1 to 2, wherein the representative transmission devices are operated at an identical first frequency.

4. The method according to Claims 1 to 3, wherein the representative transmission devices are operated at different frequencies within the bandwidth of the amplitude detection.

5. The method according to Claims 1 to 4, wherein at least one representative transmission device is supplied using different chronological supply schemata, wherein the supply is coupled in differently for each of the supply schemata.

6. The method according to any one of the preceding claims, wherein at least one navigation signal component is assigned a plurality of representative transmission devices along a variable emission front in order to reproduce a change in position or movement of the navigation signal components.

7. The method according to any one of the preceding claims, wherein at least two of the representative transmission devices are oriented to emit in different spatial directions.

8. The method according to any one of the preceding claims, wherein at least two successive pause durations and/or signal-receiving durations in the amplitude values are evaluated by the analysis device in order to assign the representative transmission devices to time segments of the received amplitude values.

9. The method according to any one of the preceding claims, wherein the representative transmission devices emit signals in the GHz range.

10. The method according to any one of the preceding claims, wherein the amplitude detection takes place in the zero-span mode of the analysis device.

11. The method according to any one of the preceding claims, wherein either the active transmission durations of the representative transmission devices or the pause durations of the representative transmission devices are equal.

12. The method according to any one of the preceding claims, wherein the chronological actuation of the representative transmission devices takes place using HF switches and/or delay lines.

13. The method according to any one of the preceding claims, wherein the evaluation device is also designed to evaluate the frequency of the received signals, in particular in order to detect Doppler shifts in the signal path.

## Revendications

1. Procédé de mesure pour l'analyse de la propagation de composants de signaux électromagnétiques,
dans lequel au moins un dispositif d'émission de substitution (100a, ..., 100k ; 220, 230) est attribué à chacun des composants de signal de navigation (15, 16),
dans lequel un dispositif d'analyse est accouplé à un dispositif de réception et exécute une détection d'amplitude en fonction du temps avec une première fréquence, dans lequel
les dispositifs d'émission de substitution (100a, ..., 100k ; 220, 230) sont activés au moins temporairement de façon décalée dans le temps,
**caractérisé en ce que**
un schéma d'alimentation temporel est associé à chaque dispositif d'émission de substitution (100a, ..., 100k ; 220, 230) pour chaque composant de signal de navigation associé à celui-ci, avec
- une durée de pause d'avance (P1) sans émission caractéristique et/ou une durée de pause de retard (P2) sans émission, lesquelles sont respectivement maintenues entre les phases de fonctionnement des dispositifs d'émission de substitution (100a, ..., 100k ; 220, 230),
ou avec
- une durée d'émission caractéristique, respectivement maintenue dans les phases de fonctionnement des dispositifs d'émission de substitution,
dans lequel l'évolution temporelle des valeurs d'amplitude reçues est évaluée par le dispositif d'analyse pour l'association du dispositif d'émission de substitution (100a, ..., 100k ; 220, 230) et du composant de signal de navigation associé à des périodes des valeurs d'amplitude reçues, en
- associant les durées de pause dans l'évolution temporelle des valeurs d'amplitude aux durées de pause d'avance et/ou aux durées de pause de retard du dispositif d'émission de substitution (100a, ..., 100k ; 220, 230), ou
- en associant la durée des signaux reçues dans l'évolution temporelle des valeurs d'amplitude aux durées d'émission du dispositif d'émission de substitution,
dans lequel la propagation des composants de signaux de navigation électromagnétiques sont analysés à l'aide des dispositifs d'émission de substitution, dans des environnements de mesure mis à l'échelle,
dans lequel les environnements de mesure mis à l'échelle sont réduits par rapport aux environnements de présentation à analyser,
dans lequel les dispositifs d'émission de substitution (100a, ..., 100k ; 220, 230) associés aux composants de signal de navigation sont activés avec des fréquences plus hautes mises à l'échelle.

2. Procédé selon la revendication 1, dans lequel, pour la détection d'amplitude, les signaux reçus sont tout d'abord convertis à une fréquence intermédiaire basse selon la première fréquence, avant l'exécution de l'analyse d'amplitude.

3. Procédé selon l'une des revendications 1 à 2, dans lequel les dispositifs d'émission de substitution sont activés avec une première fréquence identique.

4. Procédé selon l'une des revendications 1 à 3, dans lequel les dispositifs d'émission de substitution sont activés avec des fréquences différentes, lesquelles se trouvent dans la largeur de bande de la détection d'amplitude.

5. Procédé selon l'une des revendications 1 à 4, dans lequel au moins un dispositif d'émission de substitution est alimenté avec différents schémas d'alimentation temporels, le couplage de l'alimentation étant réalisé de manière différente pour chacun des schémas d'alimentation.

6. Procédé selon l'une des revendications précédentes, dans lequel une pluralité de dispositifs d'émission de substitution est associée à au moins un composant de signal de navigation le long d'un front d'émission variable, afin de reproduire une modification de position ou un mouvement des composants de signal de navigation.

7. Procédé selon l'une des revendications précédentes, dans lequel au moins deux des dispositifs d'émission de substitution sont orientés dans différentes directions spatiales pour l'émission.

8. Procédé selon l'une des revendications précédentes, dans lequel le dispositif d'analyse analyse au moins deux durées de pause consécutives et/ou durées de réception de signaux dans les valeurs d'amplitude pour l'association des dispositifs d'émission de substitution à des périodes des valeurs d'amplitude reçues.

9. Procédé selon l'une des revendications précédentes, dans lequel les dispositifs d'émission de substitution émettent des signaux dans la plage des GHz.

10. Procédé selon l'une des revendications précédentes, dans lequel la détection d'amplitude est effectuée dans un mode zéro gain du dispositif d'analyse.

11. Procédé selon l'une des revendications précédentes, dans lequel les durées d'émission actives des dispositifs d'émission de substitution ou les durées de pause des dispositifs d'émission de substitution sont identiques.

12. Procédé selon l'une des revendications précédentes, dans lequel l'activation temporelle des dispositifs d'émission de substitution est réalisée avec des commutateurs HF et/ou des lignes à retard.

13. Procédé selon l'une des revendications précédentes, dans lequel le dispositif d'évaluation est en outre conçu pour l'évaluation de la fréquence des signaux reçus, en particulier pour détecter des doubles décalages sur le trajet de signaux.
